# EUROPEAN PATENT APPLICATION

(11) **EP 3 854 207 A1**
(43) Date of publication of application: **28.07.2021**
(21) Application number: 20828250.9
(22) Date of filing: 08.07.2020
(51) Int. Cl.: A01K 5/00

(54) **TWO-GRAIN-STIRRING-PLATE MATERIAL DISCHARGING STRUCTURE AND MATERIAL DISCHARGING APPARATUS**

(30) Priority: 04.12.2019 CN 201922150937 U; 04.12.2019 CN 201922150884 U; 04.12.2019 CN 201911224577
(71) Applicant: Beijing Kitten & Puppy Technology Co., Ltd., Beijing 100085 (CN)
(72) Inventor: The designation of the inventor has not yet been filed
(74) Representative: Vesterinen, Jussi Tapio
(86) International application number: PCT/CN2020/100820
(87) International publication number: WO 2021/109572

(57) **Abstract**

The utility model provides an unloading mechanism and an unloading device with double food stirring trays, which relates to the technical field of pet snack equipment components and solves the technical problems in the prior art that traditional pet snacks have a poor unloading effect and uncontrollable unloading amount. The unloading mechanism with double food stirring trays comprises a food stirring device and a driving device, and the food stirring device comprises a rotating shaft, an upper food stirring tray and a lower food stirring tray; the upper food stirring tray comprises upper food stirring plates, the lower food stirring tray comprises lower food stirring plates, the number of the lower food stirring plates is larger than that of the upper food stirring plates; the outer wall of the rotating shaft is provided with an installation groove, and the lower food stirring plates are provided with installation strips matched with the installation groove; and the unloading device comprises a food storage bin, a transition bin and the unloading mechanism with double food stirring trays; the utility model can effectively realize the unloading of pet snacks through the unloading mechanism with double food stirring trays, and can effectively realize the control of the amount of single unloading on the premise of ensuring smooth unloading in a manner of unloading in two steps.

## Description

### TECHNICAL FIELD

The utility model relates to the technical field of pet snack equipment components, in particular to an unloading mechanism and an unloading device with double food stirring trays.

### BACKGROUND

With the rapid development of pet industry, pet snack machines, pet feeding machines and other pet snack devices are widely used by people. The unloading device of traditional pet feeding machines often has the phenomenon of material jamming during unloading, which affects its normal use. In view of this, an unloading hopper appears in the market, which can make the food drop smoothly by providing rotating upper and lower paddles to stir food. Although this device improves the unloading process of pet feeding machines to a certain extent, it cannot realize the amount of food in a single unloading process, which brings inconvenience to use.

Compared with the prior art, the applicant finds that there are at least the following technical problems.

Although the unloading device of the existing pet feeding machine can play a role of preventing the material from being stuck to a certain extent through a lower paddle, the amount of food in a single unloading process cannot be controlled, which brings inconvenience to use.

### SUMMARY

One of the objects of the utility model is to provide an unloading mechanism with double food stirring trays, which solves the technical problems in the prior art that the unloading devices of traditional pet snacks have a poor unloading effect and uncontrollable unloading amount. Many technical effects that can be produced by the preferred technical scheme among many technical schemes provided by the utility model (the shape of the installation strip is matched with the shape of the installation groove, and the cross section of the installation strip is T-shaped, so that the unloading plate is installed more firmly on the basis of ensuring convenient disassembly and assembly; the positioning block and the positioning groove are matched with each other, the structure is simple, and the synchronous rotation effect is remarkable; the connecting bolt passes through the first connecting hole and the second connecting hole, so that the upper food stirring tray and the rotating shaft are connected more firmly; the upper food stirring plate is provided as an arc blade and is provided obliquely with respect to the column part, so that it is smoother to unload; the end cover can block the first connecting hole, so as to avoid pet snacks from entering by mistake; the connecting sleeve is provided between the upper food stirring plate and the lower food stirring plate, which can effectively prevent the lower food stirring plate from separating from the rotating shaft; the transmission device comprises an input gear, a transition gear and an output gear, which adopts gear transmission and has high transmission efficiency and long service life, etc.) will be described in detail hereinafter.

In order to achieve the above object, the utility model provides the following technical scheme.

The utility model provides an unloading mechanism with double food stirring trays, comprising a food stirring device and a driving device, wherein: the food stirring device comprises a rotating shaft, an upper food stirring tray and a lower food stirring tray which are hierarchically provided on the rotating shaft, wherein one end of the rotating shaft is connected with the upper food stirring tray, and the other end of the rotating shaft is connected with the driving device, and the driving device is capable of driving the rotating shaft to rotate, so that the upper food stirring tray and the lower food stirring tray rotate synchronously; the upper food stirring tray comprises at least one upper food stirring plate, the lower food stirring tray comprises at least two lower food stirring plates, the number of the lower food stirring plates is greater than that of the upper food stirring plates, the outer wall of the rotating shaft is provided with an installation groove, the edge of the lower food stirring plate is provided with an installation strip, and the installation strip is inserted into the installation groove.

Preferably, the shape of the installation strip is matched with the shape of the installation groove, and the cross section of the installation strip is T-shaped.

Preferably, one end of the rotating shaft connected with the upper food stirring tray is provided as a connecting end, a positioning block is provided on the outer wall of the connecting end, an installation hole is provided in the middle position of the upper food stirring tray, a positioning groove is provided on the inner wall of the installation hole, the connecting end is provided in the installation hole, and the positioning block is provided in the positioning groove; the food stirring device further comprises a connecting bolt, the top of the upper food stirring tray is provided with a first connecting hole, the first connecting hole is communicated with the installation hole, the end face of the connecting end is provided with a second connecting hole, and the connecting bolt is threadedly connected with the second connecting hole through the first connecting hole to connect the upper food stirring tray with the connecting end.

Preferably, the upper food stirring tray comprises a column part, wherein: all the upper food stirring plates are circumferentially provided on the outer wall of the column part, and the installation holes and the first connecting holes are oppositely provided on two end faces of the column part, respectively; the upper food stirring plates are provided as arc blades, and all the upper food stirring plates are provided obliquely with respect to the column part.

Preferably, the food stirring device comprises an end cover, the top of the upper food stirring tray is provided with a clamping groove, the first connecting hole is provided in the clamping groove, and the end cover is clamped on the clamping groove.

Preferably, the food stirring device further comprises a connecting sleeve, and the connecting sleeve is sleeved on the rotating shaft and is located between the upper food stirring plate and the lower food stirring plate.

Preferably, the driving device comprises a power device and a transmission device, and the transmission device comprises an input gear, a transition gear and an output gear, wherein: the input gear, the transition gear and the output gear are sequentially meshed; the input gear is connected with an output shaft of the power device; the output gear is connected with the rotating shaft.

The unloading mechanism with double food stirring trays provided by the utility model has at least the following beneficial effects.

The unloading mechanism with double food stirring trays comprises a food stirring device and a driving device, wherein the driving device provides and transmits power to the food stirring device, and the rotation of the food stirring device can stir pet snacks so as to promote unloading pet snacks; the food stirring device comprises a rotating shaft, an upper food stirring tray and a lower food stirring tray which are hierarchically provided on the rotating shaft, wherein one end of the rotating shaft is connected with the upper food stirring tray, and the other end of the rotating shaft is connected with the driving device. The upper food stirring tray and the lower food stirring tray are fixedly installed and can rotate synchronously with the rotating shaft. The upper food stirring tray comprises at least one upper food stirring plate, the lower food stirring tray comprises at least two lower food stirring plates, and the number of the lower food stirring plates is greater than that of the upper food stirring plates. During use, the upper food stirring tray and the lower food stirring tray are respectively provided in two bin bodies communicated with each other. During unloading, the rotating upper food stirring plates stir pet snacks and slide them out of the first bin. The pet snacks sliding out fall between the rotating lower food stirring plates and are pulled out of the discharging port from the lower food stirring plates. In this process, because the number of the lower food stirring plates is larger than that of the upper food stirring plates, the pet food sliding out from the first bin can be pushed out from the second bin several times, which plays a role of controlling the unloading amount; the outer wall of the rotating shaft is provided with an installation groove, the edge of the lower food stirring plate is provided with an installation strip, and the installation strip is inserted into the installation groove. In the manner of inserting, a corresponding number of lower food stirring plates can be selectively installed according to actual needs; with the upper food stirring tray and the lower food stirring tray which are hierarchically provided, the utility model can not only effectively promote unloading pet snacks, but also control the unloading amount, which is convenient to use and remarkable in unloading effect.

Another object of the utility model is to provide an unloading device to solve the technical problem in the prior art that the unloading device of the pet snack machine is inconvenient to use because the unloading amount cannot be controlled. Many technical effects that can be produced by the preferred technical scheme among many technical schemes provided by the utility model (the lower bin body is provided in a funnel shape, and its caliber is reduced from top to bottom in turn, so that pet snacks in the food storage bin can slide to the position of the discharging port, which is convenient for unloading; the shape of the transition bin is provided to be cylindrical, and the lower food stirring plate divides the transition chamber into a plurality of transition units, which can not only control the amount of single unloading, but also make the amount of each unloading roughly the same, etc.) will be described in detail hereinafter.

In order to achieve the above object, the utility model provides the following technical scheme.

The utility model provides an unloading device, comprising a food storage bin, a transition bin and the unloading mechanism with double food stirring trays, wherein the food storage bin is provided above the transition bin, wherein: a food storage chamber is provided in the food storage bin, a transition chamber is provided on the transition bin, a discharging port is provided at the bottom of the food storage bin, the food storage chamber is communicated with the transition chamber through the discharging port, and the bottom of the transition bin is communicated with the transition chamber and is provided with a guiding port; the upper food stirring tray is provided in the food storage chamber and is capable of pushing out pet snacks in the food storage chamber through the discharging port; the lower food stirring tray is provided in the transition chamber, all the lower food stirring plates divide the transition chamber into at least two transition units, and pet snacks pushed out through the discharging port are capable of falling into the transition units and being pushed out by the lower food stirring plates from the guiding port.

Preferably, the food storage bin comprises an upper bin body and a lower bin body, wherein: the lower bin body is provided at the bottom of the upper bin body, and the cavity in the upper bin body and the cavity in the lower bin body enclose the food storage chamber; the lower bin body is provided in a funnel shape, and the caliber of the lower bin body decreases in turn in the direction away from the upper bin body; the discharging port is provided at the bottom of the lower bin body, and the upper food stirring tray is provided near the discharging port.

Preferably, the shape of the transition chamber is cylindrical, and all the lower food stirring plates are uniformly provided circumferentially with respect to the rotating shaft to divide the transition chamber into at least two transition units.

The unloading device provided by the utility model has at least the following beneficial effects.

The unloading device comprises a food storage bin, a transition bin and the unloading mechanism with double food stirring trays, wherein the food storage bin is provided above the transition bin, the food storage bin is used to store pet snacks, and the unloading mechanism with double food stirring trays is used to unload pet snacks; a food storage chamber is provided in the food storage bin, a transition chamber is provided on the transition bin, a discharging port is provided at the bottom of the food storage bin, the food storage chamber is communicated with the transition chamber through the discharging port, and the bottom of the transition bin is communicated with the transition chamber and is provided with a guiding port. The discharging port, the transition chamber and the guiding port can form an unloading channel for unloading pet snacks; the upper food stirring tray is provided in the food storage chamber and is capable of pushing out pet snacks in the food storage chamber through the discharging port; the lower food stirring tray is provided in the transition chamber, at least two lower food stirring plates are provided on the lower food stirring plate in the circumferential direction, all the lower food stirring plates divide the transition chamber into at least two transition units, and pet snacks pushed out through the discharging port are capable of falling into the transition units and being pushed out by the lower food stirring plates from the guiding port. The transition unit can divide the pet snacks discharged from the discharging port into a plurality of parts which are discharged sequentially; the utility model can effectively realize the unloading of pet snacks through the unloading mechanism with double food stirring trays in combination with the unloading channel. The unloading process is smoother by unloading in two steps through the upper food stirring tray and the lower food stirring tray, and the amount of single unloading can be effectively controlled by matching the lower food stirring tray with the transition unit.

### BRIEF DESCRIPTION OF THE DRAWINGS

In order to explain the embodiments of the utility model or the technical scheme in the prior art more clearly, the drawings used in the embodiments or the description of the prior art will be briefly introduced hereinafter. Obviously, the drawings in the following description are only some embodiments of the utility model. For those skilled in the art, other drawings can be obtained according to these drawings without paying creative labor.
FIG. 1 is a schematic structural diagram of an unloading mechanism with double stirring food trays according to the utility model;
FIG. 2 is a schematic structural diagram of a driving device according to the utility model;
FIG. 3 is an exploded diagram of the structure of a food stirring device according to the utility model;
FIG. 4 is a schematic structural diagram of an upper food stirring tray according to the utility model;
FIG. 5 is a schematic structural diagram of a lower food stirring plate and a rotating shaft according to the utility model;
FIG. 6 is a schematic structural diagram of an unloading device according to the utility model;
FIG. 7 is a schematic diagram of a connection structure between a driving device and a transition bin according to the utility model;
FIG. 8 is a schematic structural diagram of a food storage bin according to the utility model;
FIG. 9 is a schematic structural diagram of a transition bin according to the utility model.

### Reference number

1. Food storage bin; 11. Food storage chamber; 12. Upper bin body; 13. Lower bin body; 131. Discharging port; 132. Connecting hole; 2. Transition bin; 21. Transition chamber; 211. Guiding port; 212. Fixing hole; 22. Installation chamber; 3. Unloading mechanism with double food stirring trays; 31. Upper food stirring tray; 311. Upper food stirring plate; 312. Column part; 3121. Installation hole; 3122. Positioning groove; 32. Lower food stirring tray; 321. Lower food stirring plate; 3211. Installation strip; 322. Rotating shaft; 3221. Connecting end; 3222. Input end; 3223. Installation groove; 3224. Positioning block; 3225. Installation section; 33. Transmission device; 331. Input gear; 332. Transition gear; 333. Output gear; 334. Connecting plate; 335. Axle; 34. Power device; 341. Output shaft; 35. Connecting sleeve; 36. Connecting bolt; 37. End cover; 4. Housing

### DESCRIPTION OF THE EMBODIMENTS

In order to make the object, technical scheme and advantages of the utility model clearer, the technical scheme of the utility model will be described in detail hereinafter. Obviously, the described embodiments are only some embodiments of the utility model, rather than all of the embodiments. Based on the embodiments of the utility model, all other embodiments obtained by those skilled in the art without paying creative labor belong to the scope of protection of the utility model.

### Embodiment 1:

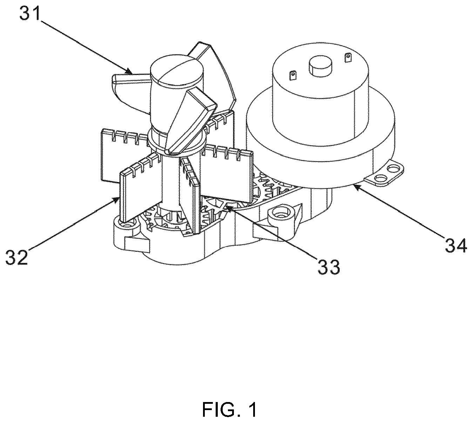

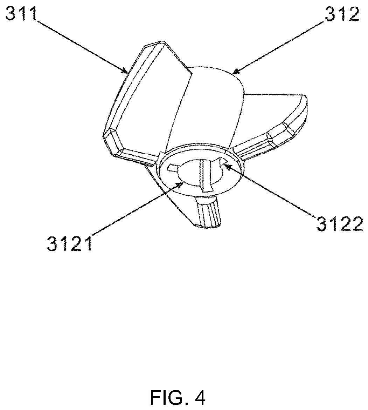

The utility model provides a unloading mechanism with double food stirring trays, as shown in FIG. 1-FIG. 5, the unloading mechanism 3 with double food stirring trays comprises a food stirring device and a driving device, wherein the food stirring device comprises a rotating shaft 322, an upper food stirring tray 31 and a lower food stirring tray 32 which are hierarchically provided on the rotating shaft 322, wherein one end of the rotating shaft 322 is connected with the upper food stirring tray 31, and the other end of the rotating shaft 322 is connected with the driving device, and the driving device is capable of driving the rotating shaft 322 to rotate, so that the upper food stirring tray 31 and the lower food stirring tray 32 rotate synchronously; the upper food stirring tray 31 and the lower food stirring tray 32 are respectively provided in two bin bodies, which are communicated with each other, of the pet snack machine, the upper food stirring tray 31 comprises at least one upper food stirring plate 311, the lower food stirring tray 32 comprises at least two lower food stirring plates 321, the number of the lower food stirring plates 321 is greater than that of the upper food stirring plates 311, the outer wall of the rotating shaft 322 is provided with an installation groove 3223, the edge of the lower food stirring plate 321 is provided with an installation strip 3211, and the installation strip 3211 is inserted into the installation groove 3223.

When in use, the driving device drives the upper food stirring tray 31 and the lower food stirring tray 32 to rotate synchronously. The rotating upper food stirring plate 311 pushes pet food from the upper bin body to the lower bin body. The rotating lower food stirring plate 321 divides and separates pet snacks into many parts, which are pushed out of the lower bin body in turn. Different numbers of lower food stirring plates 321 can divide pet snacks into corresponding parts, thus controlling the amount of unloading. With the upper food stirring tray 31 and the lower food stirring tray 32 which rotate synchronously, the utility model can not only effectively improve the unloading effect, but also control the amount of single unloading, which is convenient to use and remarkable in unloading effect.

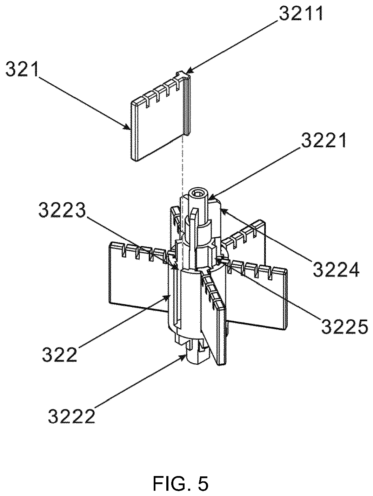

As an alternative embodiment, as shown in FIG. 5, a plurality of installation grooves 3223 are uniformly provided on the outer wall of the rotating shaft 322, and a corresponding number of lower food stirring plates 321 can be selectively installed according to actual requirements to control the amount of single unloading; preferably, the number of the installation grooves 3223 is set to six, and the number of the lower food stirring plates 321 is the same as that of the installation grooves 3223.

The shape of the installation strip 3211 is matched with the shape of the installation groove 3223, and the cross section of the installation strip 3211 is T-shaped.

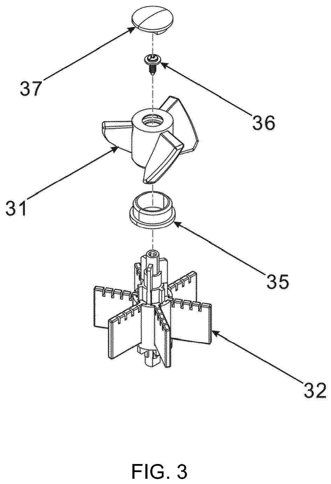

As an alternative embodiment, as shown in FIGS. 3-5, one end of the rotating shaft 322 connected with the upper food stirring tray 31 is provided as a connecting end 3221, a positioning block 3224 is provided on the outer wall of the connecting end 3221, the number of the positioning blocks 3224 is three, and the three positioning blocks 3224 are uniformly provided on the outer wall of the connecting end 3221. An installation hole 3121 is provided in the middle position of the upper food stirring tray 31. A positioning groove 3122 is provided on the inner wall of the installation hole 3121. The number of the positioning grooves 3122 is the same as that of the positioning blocks 3224. The connecting end 3221 is provided in the installation hole 3121, and the positioning block 3224 is provided in the corresponding positioning groove 3122.

The food stirring device further comprises a connecting bolt 36, the top of the upper food stirring tray 31 is provided with a first connecting hole, the first connecting hole is communicated with the installation hole 3121, the end face of the connecting end 3221 is provided with a second connecting hole, and the connecting bolt 36 is threadedly connected with the second connecting hole through the first connecting hole to connect the upper food stirring tray 31 with the connecting end 3221.

As an alternative embodiment, the upper food stirring tray 31 comprises a column part 312, wherein: all the upper food stirring plates 311 are circumferentially provided on the outer wall of the column part 312, and the installation holes 3121 and the first connecting holes are oppositely provided on two end faces of the column part 312, respectively. The installation holes 3121 are provided on the bottom surface of the column part 312, and the first connecting holes are provided on the top surface of the column part 312.

The upper food stirring plates 311 are provided as arc blades, and all the upper food stirring plates 311 are provided obliquely with respect to the column part 312. The inclination direction of the upper food stirring plates 311 is opposite to the rotation direction of the column part 312, and the upper food stirring plates 311 form propeller-like blades, which can effectively avoid the phenomenon of material clamping and splashing in the unloading process so that the unloading process is smoother.

As an alternative embodiment, the food stirring device comprises an end cover 37, the top of the upper food stirring tray 31 is provided with a clamping groove, the first connecting hole is provided in the clamping groove, and the end cover 37 is clamped on the clamping groove. The top surface of the end cover 37 is provided as an arc surface, which is convenient to unload.

As an alternative embodiment, the food stirring device further comprises a connecting sleeve 35, and the connecting sleeve 35 is sleeved on the rotating shaft 322 and is located between the upper food stirring plate 311 and the lower food stirring plate 321.

As shown in FIG. 5, the rotating shaft 322 comprises a first section, a second section and a third section which are sequentially provided from bottom to top. The diameters of the first section, the second section and the third section are sequentially reduced, so that the rotating shaft 322 is stepped. The installation groove 3223 is provided on the first section. The top end of the third section is provided as a connecting end 3221. A plurality of connecting strips are vertically and uniformly provided on the outer wall of the second section. The outer side of the connecting strip far away from the second section is provided as an arc surface, so that the outer sides of all the connecting strips form an installation surfaces matched with the inner wall of the connecting sleeve 35 in size. The second section forms an installation section 3225. The connection sleeve 35 is sleeved on the installation section 3225, and the inner wall is attached to the installation surface. The bottom of the connection sleeve 35 is provided with a flange, and the diameter of the flange is not less than that of the first section, which effectively prevents the lower food stirring plate 321 from escaping from the installation groove 3223.

As an alternative embodiment, the driving device comprises a power device 34 and a transmission device 33, wherein the power device 34 is provided as a motor, and the transmission device 33 comprises an input gear 331, a transition gear 332 and an output gear 333, wherein: the input gear 331, the transition gear 332 and the output gear 333 are sequentially meshed; the input gear 331 is connected with an output shaft 341 of the power device 34; the output gear 333 is connected with the rotating shaft 322.

As an alternative embodiment, one end of the rotating shaft 322 connected with the output gear 333 is provided as an input end 3222, and a first fixing groove is provided at the middle position of the output gear 333. The input end 3222 is provided in the first fixing groove. The shape of the first fixing groove is matched with the shape of the input end 3222, and the shape of the first fixing groove is provided as a rounded rectangle.

A second fixing groove is provided with at the middle position of the input gear 331. The output shaft 341 of the power device 34 is provided in the second fixing groove. The shape of the second fixing groove is matched with the shape of the output shaft 341, and the shape of the second fixing groove is provided as a rounded rectangle.

### Embodiment 2:

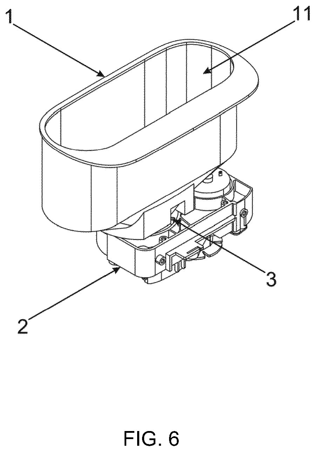

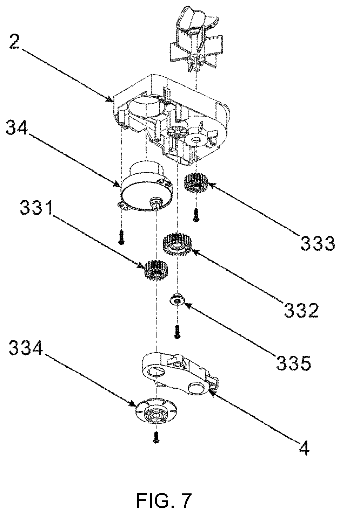

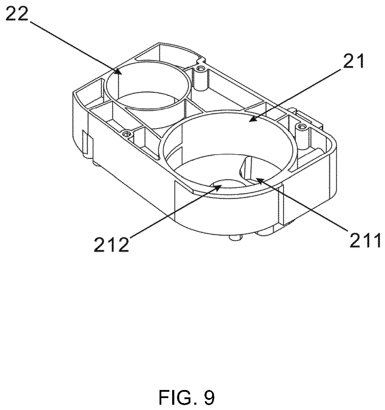

Embodiment 2 is based on embodiment 1: as shown in FIGS. 6-9, the utility model provides an unloading device, comprising a food storage bin 1, a transition bin 2 and the unloading mechanism 3 with double food stirring trays, wherein the food storage bin 1 is provided above the transition bin 2, wherein: a food storage chamber 11 is provided in the food storage bin 1, a transition chamber 21 is provided on the transition bin 2, a discharging port 131 is provided at the bottom of the food storage bin 1, the food storage chamber 11 is communicated with the transition chamber 21 through the discharging port 131, and the bottom of the transition bin 2 is communicated with the transition chamber 21 and is provided with a guiding port 211. The discharging port 131, the transition chamber 21 and the guiding port 211 form an unloading channel for unloading pet snacks; the upper food stirring tray 31 is provided in the food storage chamber 11 and is capable of pushing out pet snacks in the food storage chamber 11 through the discharging port 131; the lower food stirring tray 32 is provided in the transition chamber 21, all the lower food stirring plates 321 divide the transition chamber 21 into at least two transition units, and pet snacks pushed out through the discharging port 131 are capable of falling into the transition units and being pushed out by the lower food stirring plates 321 from the guiding port 211.

When in use, the upper food stirring tray 31 rotates, and the pet snacks in the food storage chamber 11 slide out from the discharging port 131 under the driving of the upper food stirring tray 31. At this time, the pet snacks sliding out just fall into the transition unit. The lower food stirring tray 32 rotates to push the pet snacks in the transition unit to the position of the guiding port 211, and the pet snacks are discharged from the guiding port 211. In the utility model, automatic unloading of pet snacks can be realized through the mutual cooperation of the unloading channel and the unloading mechanism 3 with double food stirring plates, and the unloading is smoother through the mutual cooperation of the upper food stirring tray 31 and the lower food stirring tray 32; meanwhile, the amount of single unloading can be effectively controlled through the lower food stirring plate 321 and the transition unit, and the effect is remarkable.

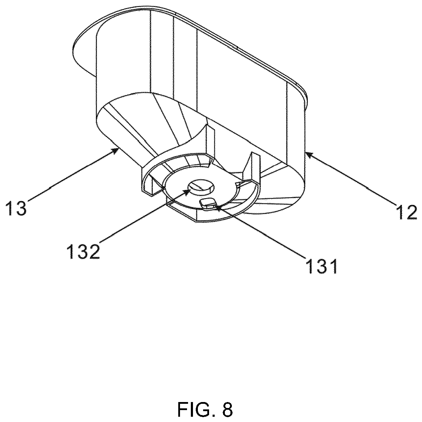

As an alternative embodiment, as shown in FIG. 8, the food storage bin 1 comprises an upper bin body 12 and a lower bin body 13, wherein: the lower bin body 13 is provided at the bottom of the upper bin body 12, and the cavity in the upper bin body 12 and the cavity in the lower bin body 13 enclose the food storage chamber 11; the lower bin body 13 is provided in a funnel shape, and the caliber of the lower bin body 13 decreases in turn in the direction away from the upper bin body 12; the discharging port 131 is provided at the bottom of the lower bin body 13, and the bottom of the lower bin body 13 is also communicated with a connecting hole 132. The connecting end 3221 is in transmission connection with the upper food stirring tray 31 through the connecting hole 132, and the upper food stirring tray 31 is provided near the discharging port 131. The shape of the cross section of the upper bin body 12 is a rounded rectangle, and the shape of the cross section of the lower bin body 13 is provided as a rounded rectangle. The lower bin body 13 with a funnel shape is used as a whole, which is convenient for pet snacks to slide down to a position close to the discharging port 131 and is convenient to unload.

As an alternative embodiment, the shape of the transition chamber 21 is cylindrical, and all the lower food stirring plates 321 are uniformly provided circumferentially with respect to the rotating shaft 322 to divide the transition chamber 21 into at least two transition units.

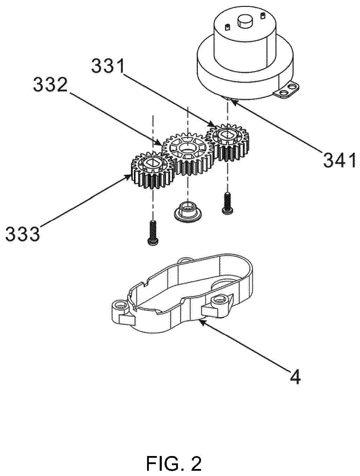

As an alternative embodiment, as shown in FIGS. 2, 7 and 9, the transition bin 2 is provided with an installation part and an installation chamber 22, one end of the power device 34 is provided in the installation chamber 22, and the other end of the power device 34 is in transmission connection with the input gear 331 through the output shaft 341; the transition gear 332 is provided on the installation part; the input end 3222 of the rotating shaft 322 is connected with the output gear 333 through the transition chamber 21. The bottom of the transition bin 2 is communicated with the transition chamber 21 and is provided with a fixing hole 212. The input end 3222 is connected with the output gear 333 through the fixing hole 212.

As an alternative embodiment, as shown in FIG. 2, a housing 4 is detachably connected below the transition bin 2; the output shaft 341 of the power device 34 and the transmission device 33 are both provided in the housing 4; an axle 335 is provided in the housing 4, and the transition gear 332 is sleeved on the axle 335 and can rotate with respect to the axle 335. A through hole is provided at the bottom of the housing 4. The output shaft 341 is connected with the connecting plate 334 through the through hole. The output shaft 341, the input gear 331 and the connecting plate 334 rotate synchronously with respect to the through hole.

The above is only the specific embodiment of the utility model, but the protection scope of the utility model is not limited thereto. Any changes or substitutions conceivable to those skilled in the art within the technical scope disclosed by the utility model should be covered within the protection scope of the utility model. Therefore, the protection scope of the utility model shall be subject to the protection scope of the claims.

## Claims

1. An unloading mechanism with double food stirring trays, comprising a food stirring device and a driving device, wherein:
the food stirring device comprises a rotating shaft (322), an upper food stirring tray (31) and a lower food stirring tray (32) which are hierarchically provided on the rotating shaft (322), wherein one end of the rotating shaft (322) is connected with the upper food stirring tray (31), and the other end of the rotating shaft (322) is connected with the driving device, and the driving device is capable of driving the rotating shaft (322) to rotate, so that the upper food stirring tray (31) and the lower food stirring tray (32) rotate synchronously;
the upper food stirring tray (31) comprises at least one upper food stirring plate (311), the lower food stirring tray (32) comprises at least two lower food stirring plates (321), the number of the lower food stirring plates (321) is greater than that of the upper food stirring plates (311), the outer wall of the rotating shaft (322) is provided with an installation groove (3223), the edge of the lower food stirring plate (321) is provided with an installation strip (3211), and the installation strip (3211) is inserted into the installation groove (3223).

2. The unloading mechanism (3) with double food stirring trays according to claim 1, wherein the shape of the installation strip (3211) is matched with the shape of the installation groove (3223), and the cross section of the installation strip (3211) is T-shaped.

3. The unloading mechanism (3) with double food stirring trays according to claim 1, wherein one end of the rotating shaft (322) connected with the upper food stirring tray (31) is provided as a connecting end (3221), a positioning block (3224) is provided on the outer wall of the connecting end (3221), an installation hole (3121) is provided in the middle position of the upper food stirring tray (31), a positioning groove (3122) is provided on the inner wall of the installation hole (3121), the connecting end (3221) is provided in the installation hole (3121), and the positioning block (3224) is provided in the positioning groove (3122);
the food stirring device further comprises a connecting bolt (36), the top of the upper food stirring tray (31) is provided with a first connecting hole, the first connecting hole is communicated with the installation hole (3121), the end face of the connecting end (3221) is provided with a second connecting hole, and the connecting bolt (36) is threadedly connected with the second connecting hole through the first connecting hole to connect the upper food stirring tray (31) with the connecting end (3221).

4. The unloading mechanism (3) with double food stirring trays according to claim 3, wherein the upper food stirring tray (31) comprises a column part (312), wherein:
all the upper food stirring plates (311) are circumferentially provided on the outer wall of the column part (312), and the installation holes (3121) and the first connecting holes are oppositely provided on two end faces of the column part (312), respectively;
the upper food stirring plates (311) are provided as arc blades, and all the upper food stirring plates (311) are provided obliquely with respect to the column part (312).

5. The unloading mechanism (3) with double food stirring trays according to claim 3, wherein the food stirring device comprises an end cover (37), the top of the upper food stirring tray (31) is provided with a clamping groove, the first connecting hole is provided in the clamping groove, and the end cover (37) is clamped on the clamping groove.

6. The unloading mechanism (3) with double food stirring trays according to claim 1, wherein the food stirring device further comprises a connecting sleeve (35), and the connecting sleeve (35) is sleeved on the rotating shaft (322) and is located between the upper food stirring plate (311) and the lower food stirring plate (321).

7. The unloading mechanism (3) with double food stirring trays according to claim 1, wherein the driving device comprises a power device (34) and a transmission device (33), and the transmission device (33) comprises an input gear (331), a transition gear (332) and an output gear (333), wherein:
the input gear (331), the transition gear (332) and the output gear (333) are sequentially meshed;
the input gear (331) is connected with an output shaft (341) of the power device (34);
the output gear (333) is connected with the rotating shaft (322).

8. An unloading device, comprising a food storage bin (1), a transition bin (2) and the unloading mechanism (3) with double food stirring trays according to any one of claims 1-7, wherein the food storage bin (1) is provided above the transition bin (2), wherein:
a food storage chamber (11) is provided in the food storage bin (1), a transition chamber (21) is provided on the transition bin (2), a discharging port (131) is provided at the bottom of the food storage bin (1), the food storage chamber (11) is communicated with the transition chamber (21) through the discharging port (131), and the bottom of the transition bin (2) is communicated with the transition chamber (21) and is provided with a guiding port (211);
the upper food stirring tray (31) is provided in the food storage chamber (11) and is capable of pushing out pet snacks in the food storage chamber (11) through the discharging port (131);
the lower food stirring tray (32) is provided in the transition chamber (21), all the lower food stirring plates (321) divide the transition chamber (21) into at least two transition units, and pet snacks pushed out through the discharging port (131) are capable of falling into the transition units and being pushed out by the lower food stirring plates (321) from the guiding port (211).

9. The unloading device according to claim 8, wherein the food storage bin (1) comprises an upper bin body (12) and a lower bin body (13), wherein:
the lower bin body (13) is provided at the bottom of the upper bin body (12), and the cavity in the upper bin body (12) and the cavity in the lower bin body (13) enclose the food storage chamber (11);
the lower bin body (13) is provided in a funnel shape, and the caliber of the lower bin body (13) decreases in turn in the direction away from the upper bin body (12);
the discharging port (131) is provided at the bottom of the lower bin body (13), and the upper food stirring tray (31) is provided near the discharging port (131).

10. The unloading device according to claim 8, wherein the shape of the transition chamber (21) is cylindrical, and all the lower food stirring plates (321) are uniformly provided circumferentially with respect to the rotating shaft (322) to divide the transition chamber (21) into at least two transition units.
